# EUROPEAN PATENT APPLICATION

(11) **EP 4 134 995 A1**
(43) Date of publication of application: **15.02.2023**
(21) Application number: 21804932.8
(22) Date of filing: 13.05.2021
(51) Int. Cl.: H01G 11/74, H01M 10/04, H01M 50/172, H01M 50/543

(54) **ELECTRICAL STORAGE ELEMENT**

(30) Priority: 14.05.2020 JP 2020085277
(71) Applicant: GS Yuasa International Ltd., Kisshoin, Minami-ku, Kyoto-shi, Kyoto 601-8520 (JP)
(72) Inventor: KAWAI, Akio, Kyoto-shi, Kyoto 601-8520 (JP); KOZONO, Sho, Kyoto-shi, Kyoto 601-8520 (JP)
(74) Representative: Isarpatent
(86) International application number: PCT/JP2021/018262
(87) International publication number: WO 2021/230330

(57) **Abstract**

The present embodiment includes: an electrode assembly; a case that accommodates the electrode assembly; and an external terminal made of metal and disposed in the case, in which the external terminal includes: a flange portion spreading along the case outside the case; and a shaft portion extending from the flange portion, penetrating the case, and electrically connected to the electrode assembly, in which the flange portion includes a plurality of metal layers layered in a penetrating direction of the shaft portion, and in which one metal layer of the plurality of metal layers covers a peripheral end surface of another metal layer.

## Description

### TECHNICAL FIELD

The present invention relates to an energy storage device including an external terminal.

### BACKGROUND ART

Conventionally, a lithium ion secondary battery including an external terminal has been known (see Patent Document 1). In this lithium ion secondary battery, as shown in FIG. 13, an external terminal 100 includes a shaft portion 101 and a flange portion 102 which extends from the shaft portion 101 and to which another member such as a bus bar is welded.

In such an external terminal 100, it is conceivable to layer a plurality of metal layers from the viewpoint of securing the strength of the flange portion 102 and the like.

However, in the flange portion in which a plurality of metal layers are layered as described above, there is a concern that moisture may infiltrate into the metal layers from a peripheral end surface of the flange portion.

### PRIOR ART DOCUMENT

### PATENT DOCUMENT

Patent Document 1: JP-A-2009-259524

### SUMMARY OF THE INVENTION

### PROBLEMS TO BE SOLVED BY THE INVENTION

In view of the above, an object of the present embodiment is to provide an energy storage device capable of suppressing the infiltration of moisture into metal layers in a flange portion of an external terminal in which a plurality of metal layers are layered.

### MEANS FOR SOLVING THE PROBLEMS

The energy storage device of the present embodiment includes: an electrode assembly; a case that accommodates the electrode assembly; and an external terminal made of metal and disposed in the case, in which the external terminal includes: a flange portion spreading along the case outside the case; and a shaft portion extending from the flange portion, penetrating the case, and electrically connected to the electrode assembly, in which the flange portion includes a plurality of metal layers layered in a penetrating direction of the shaft portion, and in which one metal layer of the plurality of metal layers covers at least a peripheral end surface of a metal layer adjacent to the one metal layer in the penetrating direction.

### BRIEF DESCRIPTION OF THE DRAWINGS

FIG. 1 is a perspective view of an energy storage device according to the present embodiment.
FIG. 2 is an exploded perspective view of the energy storage device.
FIG. 3 is a view for explaining a configuration of an electrode assembly provided in the energy storage device.
Fig. 4 is an enlarged cross-sectional view of a positive electrode terminal of the energy storage device and its periphery.
FIG. 5 is an enlarged view of a portion indicated by V in FIG. 1.
FIG. 6 is a cross-sectional view taken along line VI-VI in FIG. 5.
FIG. 7 is a cross-sectional view for explaining a configuration of a negative electrode flange portion.
FIG. 8 is a cross-sectional view showing a configuration of the negative electrode shaft portion and its periphery in a state where the negative electrode shaft portion is not swaged.
FIG. 9 is a view for explaining a bulge of a thin portion caused by swaging.
FIG. 10 is an enlarged cross-sectional view for explaining a configuration of a negative electrode flange portion according to another embodiment.
FIG. 11 is an enlarged cross-sectional view for explaining a configuration of a negative electrode terminal according to another embodiment.
FIG. 12 is a schematic view showing an energy storage apparatus including the energy storage devices.

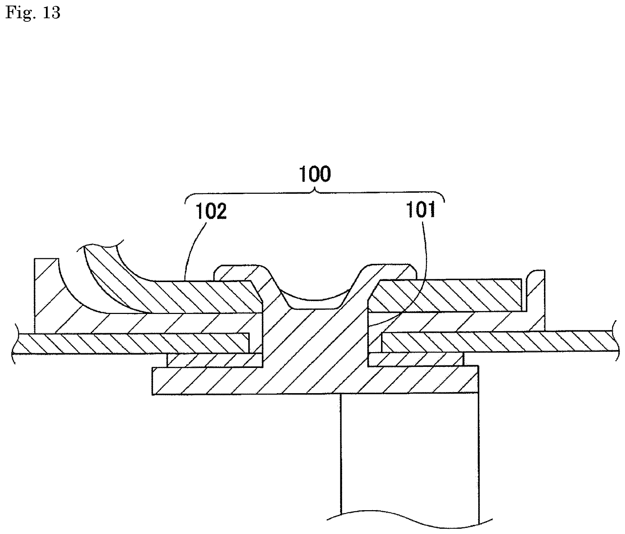

FIG. 13 is an enlarged cross-sectional view for explaining a configuration of a conventional external terminal.

### MODE FOR CARRYING OUT THE INVENTION

The energy storage device of the present embodiment includes: an electrode assembly; a case that accommodates the electrode assembly; and an external terminal made of metal and disposed in the case, in which the external terminal includes: a flange portion spreading along the case outside the case; and a shaft portion extending from the flange portion, penetrating the case, and electrically connected to the electrode assembly, in which the flange portion includes a plurality of metal layers layered in a penetrating direction of the shaft portion, and in which one metal layer of the plurality of metal layers covers at least a peripheral end surface of a metal layer adjacent to the one metal layer in the penetrating direction.

According to such a configuration, the infiltration of moisture from the peripheral end surface of the flange portion into between the at least one metal layer and the metal layer adjacent to the one metal layer in the flange portion is suppressed.

In the energy storage device, the flange portion may be formed of a clad material, metal layers adjacent to each other in the plurality of metal layers may be made of different kinds of metals, and the one metal layer may be a metal layer at one end in the penetrating direction among the plurality of metal layers, and cover a peripheral end surface of a remaining metal layer among the plurality of metal layers.

In the flange portion formed of a clad material as described above, the metal layer at the one end covers the peripheral end surface of the remaining metal layer, so that the infiltration of moisture into each metal diffusion layer from the peripheral end surface of the flange portion is effectively suppressed.

Further, in the energy storage device, the one metal layer may be a metal layer at an end opposite to the case in the penetrating direction among the plurality of metal layers, and cover a peripheral end surface of a remaining metal layer among the plurality of metal layers.

In the energy storage device, a portion of the flange portion on the opposite side to the case has no or less arrangement of other members than a portion on the case side, and is thus released, so that moisture easily approaches the flange portion. However, as in the above configuration, the metal layer at the end of the flange portion on the opposite side to the case covers the peripheral end surface of the remaining metal layer from the opposite side toward the case, so that the infiltration of moisture into the metal layers from the released side (opposite side to the case) is effectively suppressed.

The energy storage device of the present embodiment includes: an electrode assembly; a case that accommodates the electrode assembly; and an external terminal made of metal and disposed in the case, in which the external terminal includes: a flange portion spreading along an outer surface of the case outside the case; and a shaft portion extending from the flange portion, penetrating the case, and electrically connected to the electrode assembly, in which the flange portion includes a plurality of metal layers layered in a penetrating direction of the shaft portion, in which a second metal layer of the plurality of metal layers protrudes in the penetrating direction at least along a peripheral end surface of a first metal layer adjacent to the second metal layer in the penetrating direction, and in which the peripheral end surface is an end surface of the first metal layer in a direction orthogonal to the penetrating direction.

According to such a configuration, at least the infiltration of moisture from the peripheral end surface of the flange portion into between the second metal layer and the first metal layer adjacent to the second metal layer in the flange portion is suppressed.

The flange portion may be formed of a clad material, metal layers adjacent to each other in the plurality of metal layers may be made of different kinds of metals, the second metal layer may be a metal layer disposed on an outermost side among the plurality of metal layers in the penetrating direction, and the second metal layer may include a cover portion protruding in the penetrating direction along the peripheral end surface of a remaining metal layer of the plurality of metal layers.

In the flange portion formed of a clad material as described above, the second metal layer disposed on the outermost side covers the peripheral end surface of the remaining metal layer, so that the infiltration of moisture into each metal diffusion layer from the peripheral end surface of the flange portion is effectively suppressed.

The second metal layer may be a metal layer opposite to the case among the plurality of metal layers in the penetrating direction.

The second metal layer may be a metal layer disposed on an outermost side among the plurality of metal layers in the penetrating direction, and the second metal layer may include a cover portion protruding from a boundary surface between the second metal layer and the first metal layer, the boundary surface spreading in a direction orthogonal to the penetrating direction, the cover portion protruding in the penetrating direction along an outer periphery of the first metal layer.

The external terminal may be a negative electrode.

The second metal layer may include aluminum or an aluminum-based metal, and the first metal layer may contain copper or a copper-based metal layer.

The flange portion may include a through hole through which the shaft portion is inserted, the shaft portion may include: an enlarged diameter portion formed between the flange portion and the outer surface of the case and spreading along the outer surface of the case; and a swaged portion spreading along a surface of the flange portion opposite to the case and sandwiches a peripheral edge portion of the through hole in the flange portion between the swaged portion and the enlarged diameter portion, and a second metal layer which is a metal layer opposite to the case in the penetrating direction among the plurality of metal layers may include a concave part recessed in the penetrating direction or a through hole penetrating in the penetrating direction in a region that is larger than the swaged portion as viewed in the penetrating direction and includes the swaged portion as viewed in the penetrating direction.

The flange portion may include a convex part protruding in the penetrating direction in the concave part of the second metal layer, and the convex part may be disposed between an outer peripheral edge of the concave part and an outer peripheral edge of the swaged portion in a direction orthogonal to the penetrating direction.

As described above, according to the present embodiment, it is possible to provide the energy storage device capable of suppressing the infiltration of moisture into the metal layers in the flange portion of the external terminal in which the plurality of metal layers are layered.

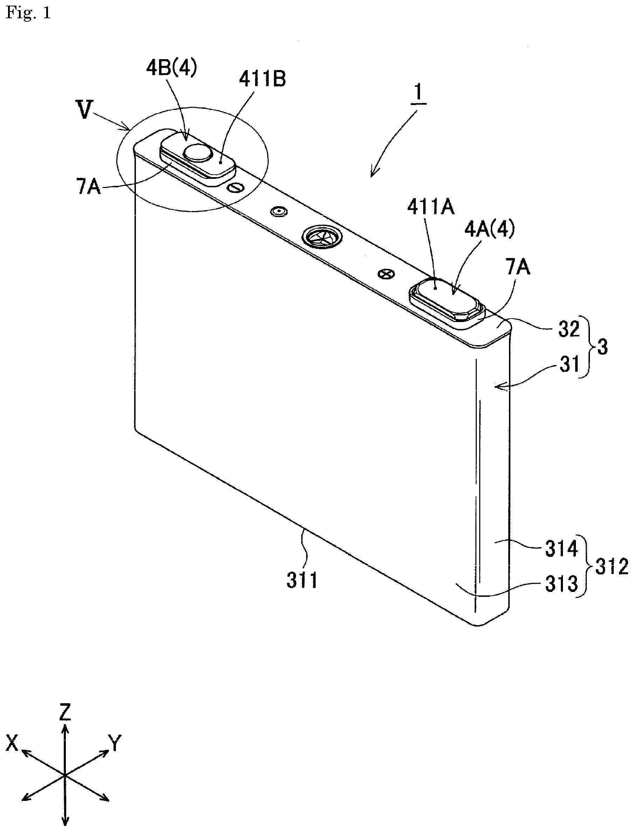

Hereinafter, an embodiment of the present invention will be described with reference to FIGS. 1 to 9. The names of the constituent members (constituent elements) of the present embodiment are used in the present embodiment, and may differ from the names of the constituent members (constituent elements) in the background technology.

The energy storage device of the present embodiment is a nonaqueous electrolyte secondary battery. More specifically, the energy storage device is a lithium ion secondary battery that utilize electron transfer caused by movement of lithium ions. This type of energy storage device supplies electric energy. A single or a plurality of energy storage devices are used. Specifically, the energy storage device is used singly when required power and required voltage are small. On the other hand, when at least one of the required power and the required voltage is large, the energy storage device is used in an energy storage apparatus in combination with another energy storage device. In the energy storage apparatus, an energy storage device used in the energy storage apparatus supplies electric energy.

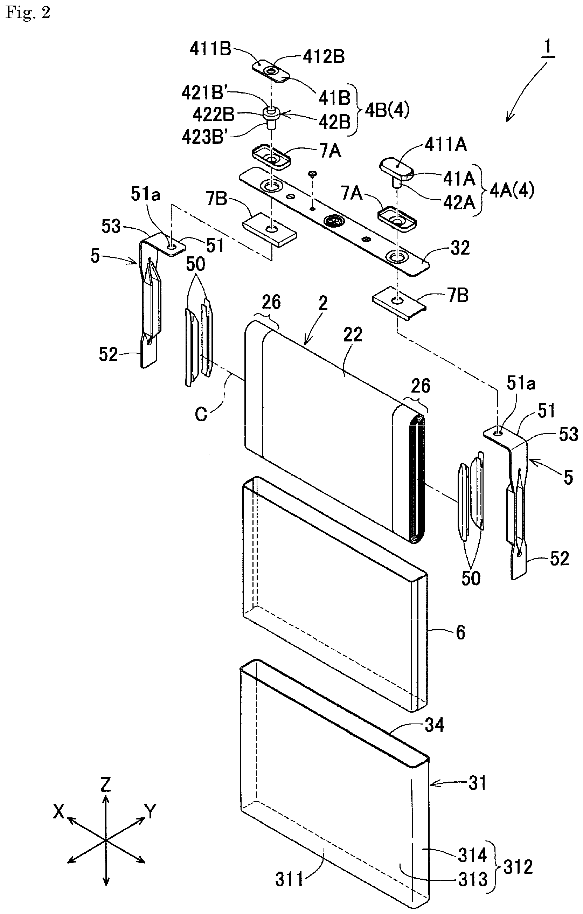

As shown in FIG. 1 and FIG. 2, an energy storage device includes an electrode assembly 2, a case 3 which accommodates the electrode assembly 2, and metal external terminals 4 which are disposed on the case 3. The energy storage device 1 also includes current collectors 5 which make the electrode assembly 2 and the external terminals 4 conductive with each other, an insulating member 6 disposed between the electrode assembly 2 and the case 3, and the like. The external terminal 4 (to be more specific, a negative electrode shaft portion 42B of a negative electrode terminal 4B) shown in FIG. 2 has a shape before being swaged.

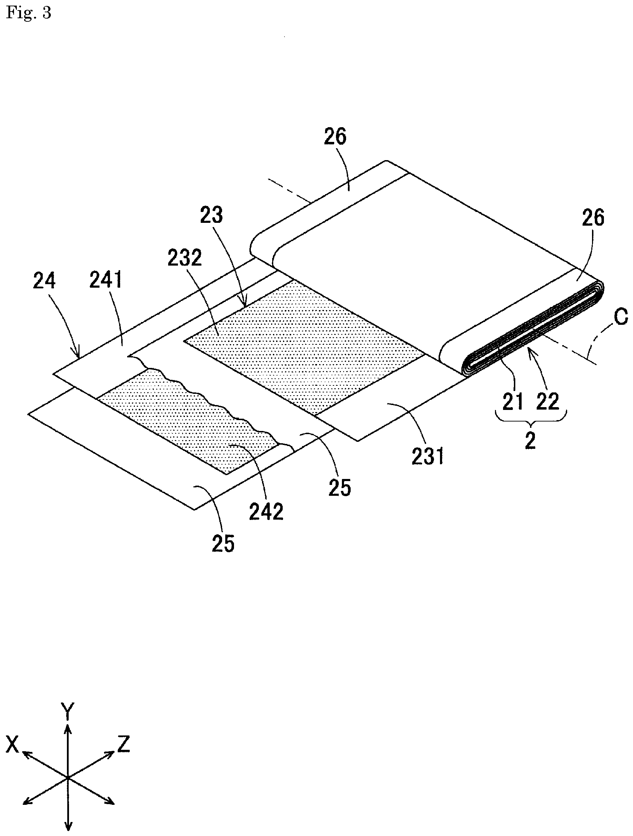

As also shown in FIG. 3, the electrode assembly 2 has wound electrodes (a positive electrode 23 and a negative electrode 24). To be more specific, the electrode assembly 2 includes a winding core 21 and a layered product 22 formed of electrodes wound around the winding core 21. In the layered product 22, the positive electrode 23 and the negative electrode 24 are layered in a state of being insulated from each other. In the electrode assembly 2, lithium ions move between the positive electrode 23 and the negative electrode 24, whereby the energy storage device 1 is charged-discharged.

The positive electrode 23 includes a strip-like metal foil 231 and a positive active material layer 232 overlapped on the metal foil 231. The positive active material layer 232 is overlapped on the metal foil 231 in a state where one end edge portion (uncovered portion) of the metal foil 231 in the width direction is exposed. The metal foil 231 of the present embodiment is, for example, an aluminum foil.

The negative electrode 24 includes a strip-like metal foil 241 and a negative active material layer 242 overlapped on the metal foil 241. The negative active material layer 242 is overlapped on the metal foil 241 in a state where the other end edge portion (uncovered portion) of the metal foil 241 in the width direction (on the opposite side to the uncovered portion of the metal foil 231 of the positive electrode 23) is exposed. The metal foil 241 of the present embodiment is, for example, a copper foil.

In the electrode assembly 2 of the present embodiment, the positive electrode 23 and the negative electrode 24 are wound in a state of being insulated from each other by a separator 25. That is, in the layered product 22 of the present embodiment, the positive electrode 23, the negative electrode 24, and the separator 25 are layered.

The separator 25 is a member having an insulating property and is disposed between the positive electrode 23 and the negative electrode 24. With such a configuration, in the electrode assembly 2 (specifically, the layered product 22), the positive electrode 23 and the negative electrode 24 are insulated from each other. The separator 25 holds an electrolyte solution in the case 3. With such a configuration, at the time of charge-discharge of the energy storage device 1, lithium ions can move between the positive electrode 23 and the negative electrode 24 which are alternately layered with the separator 25 interposed therebetween.

The separator 25 has a strip shape, and is formed of, for example, a porous film of polyethylene, polypropylene, cellulose, polyamide, or the like. The separator 25 of the present embodiment includes a substrate formed of a porous film and an inorganic layer provided on the substrate. The inorganic layer contains inorganic particles such as SiO₂ particles, Al₂O₃ particles, and boehmite (alumina hydrate). The substrate is made of, for example, polyethylene.

The dimension of the separator 25 in the width direction is larger than the width of the negative active material layer 242. The separator 25 is disposed between the positive electrode 23 and the negative electrode 24 overlaid on each other in a state where the positive active material layer 232 and the negative active material layer 242 are displaced in the width direction so as to be overlapped on each other in the thickness direction (layering direction). At this time, the uncovered portion of the positive electrode 23 and the uncovered portion of the negative electrode 24 do not overlap each other. That is, the uncovered portion of the positive electrode 23 protrudes in the width direction (direction orthogonal to the layering direction) from the region where the positive electrode 23 and the negative electrode 24 overlap each other, and the uncovered portion of the negative electrode 24 protrudes in the width direction (direction opposite to the protruding direction of the uncovered portion of the positive electrode 23) from the region where the positive electrode 23 and the negative electrode 24 overlap each other. The electrode assembly 2 is formed by winding the positive electrode 23, the negative electrode 24, and the separator 25 around the winding core 21 in such a layered state (relative position). In the electrode assembly 2 of the present embodiment, an uncovered layered portion 26 in the electrode assembly 2 is formed by a portion where only the uncovered portion of the positive electrode 23 or the uncovered portion of the negative electrode 24 is layered.

The uncovered layered portion 26 is provided on each electrode of the electrode assembly 2. That is, the uncovered layered portion 26 in which only the uncovered portion of the positive electrode 23 is layered forms an uncovered layered portion of the positive electrode in the electrode assembly 2, and the uncovered layered portion 26 in which only the uncovered portion of the negative electrode 24 is layered forms an uncovered layered portion of the negative electrode in the electrode assembly 2.

The case 3 stores an electrolyte solution together with the electrode assembly 2. Specifically, the case 3 includes a case main body 31 having an opening, and a lid plate 32 that closes the opening of the case main body 31. The case 3 is made of metal having resistance to an electrolyte solution. The case 3 of the present embodiment is made of, for example, aluminum or an aluminum-based metal such as an aluminum alloy.

The electrolyte solution is a non-aqueous electrolytic solution. The electrolyte solution is obtained by dissolving electrolyte salt in an organic solvent. Examples of the organic solvent include cyclic carbonate esters such as propylene carbonate and ethylene carbonate, and chain carbonates such as dimethyl carbonate, diethyl carbonate, and ethyl methyl carbonate. Examples of the electrolyte salt include LiClO₄, LiBF₄, and LiPF₆. The electrolyte solution of the present embodiment is obtained by dissolving 1 mol/L of LiPF₆ in a mixed solvent prepared by adjusting ethylene carbonate, dimethyl carbonate, and ethyl methyl carbonate at a ratio of ethylene carbonate: dimethyl carbonate: ethyl methyl carbonate = 3:2:5.

The case main body 31 includes a plate-like closing portion 311 and a cylindrical body portion (peripheral wall) 312 connected to a peripheral edge of the closing portion 311.

The closing portion 311 is a portion located at a lower end of the case main body 31 when the case main body 31 is disposed in a posture in which the opening faces upward (that is, serving as a bottom wall of the case main body 31 when the opening faces upward). The closing portion 311 has a rectangular shape as viewed from the normal direction of the closing portion 311. Hereinafter, the long side direction of the closing portion 311 is defined as the X axis of the orthogonal coordinate system, the short side direction of the closing portion 311 is defined as the Y axis of the orthogonal coordinate system, and the normal direction of the closing portion 311 is defined as the Z axis of the orthogonal coordinate system.

The body portion 312 has a square tube shape, more specifically, a flat square tube shape. The body portion 312 includes a pair of long wall portions 313 extending from the long sides at the peripheral edge of the closing portion 311, and a pair of short wall portions 314 extending from the short sides at the peripheral edge of the closing portion 311. That is, the pair of long wall portions 313 face each other at an interval (specifically, an interval corresponding to the short side at the peripheral edge of the closing portion 311) in the Y-axis direction, and the pair of short wall portions 314 face each other at an interval (specifically, an interval corresponding to the long side at the peripheral edge of the closing portion 311) in the X-axis direction. The short wall portions 314 connect corresponding end portions (specifically, facing each other in the Y-axis direction) of the pair of long wall portions 313 to each other, thereby forming the body portion 312 having a square tube shape.

As described above, the case main body 31 has a square tube shape in which one end portion in the opening direction (Z-axis direction) is closed (that is, a bottomed square tube shape). The electrode assembly 2 is accommodated in the case main body 31 in a state where the winding center axis C direction is directed to the X-axis direction.

The lid plate 32 is a plate-like member that closes the opening of the case main body 31. The lid plate 32 of the present embodiment is a rectangular plate member that is long in the X-axis direction as viewed in the Z-axis direction. In the lid plate 32, the peripheral edge portion of the lid plate 32 is overlapped on an opening peripheral edge portion 34 of the case main body 31 so as to close the opening of the case main body 31. In a state where the lid plate 32 is overlapped on the opening peripheral edge portion 34, a boundary portion between the lid plate 32 and the case main body 31 is welded, whereby the case 3 is formed.

The external terminal 4 is a portion of the energy storage device 1 which is electrically connected to an external terminal of another energy storage device, an external device, or the like. The external terminal 4 is formed of a member having conductivity. The energy storage device 1 of the present embodiment includes two types of external terminals 4 of a positive electrode terminal 4A and a negative electrode terminal 4B. These two external terminals 4 are disposed in the case 3 at positions spaced apart from each other in the X-axis direction, more specifically, at the respective end portion positions of the case 3 in the X-axis direction in a state where parts 42A and 42B penetrate the case 3.

In the energy storage device 1 of the present embodiment, insulating members 7A and 7B are disposed between the external terminal 4 and the case 3 and between the case 3 and the current collector 5. The insulating member 7A insulates between the external terminal 4 and the case 3 (lid plate 32 in the example of the present embodiment), and seals between the portions 42A, 42B of the external terminal 4 penetrating the case 3 and the case 3. The insulating member 7B insulates between the case 3 (lid plate 32 in the example of the present embodiment) and the current collector 5.

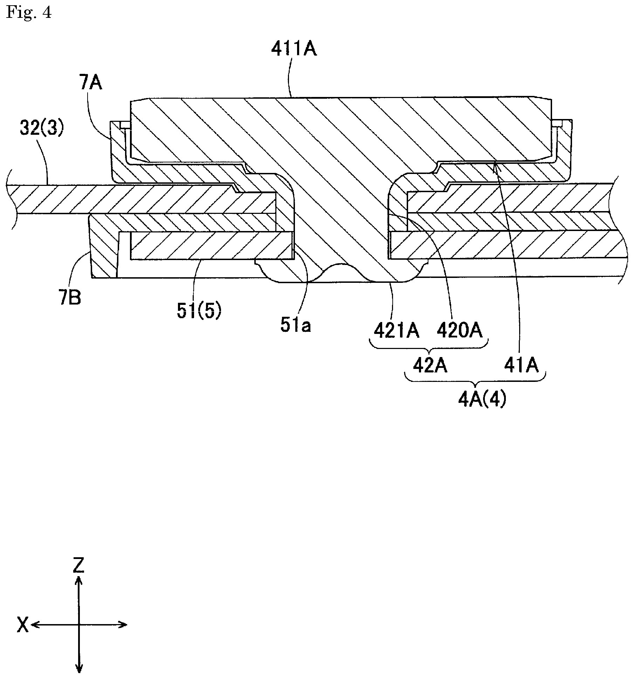

As also shown in FIG. 4, the positive electrode terminal 4A has a positive electrode flange portion 41A which spreads along the case 3 outside the case 3, and a positive electrode shaft portion 42A which extends from the positive electrode flange portion 41A, penetrates the case 3, and is electrically connected to the electrode assembly 2. In the positive electrode terminal 4A, the positive electrode flange portion 41A and the positive electrode shaft portion 42A are integrated. The positive electrode terminal 4A of the present embodiment is made of, for example, aluminum or an aluminum-based metal such as an aluminum alloy.

The positive electrode flange portion 41A spreads along the lid plate 32 of the case 3. To be more specific, the positive electrode flange portion 41A has a rectangular plate shape elongated in the X-axis direction. The positive electrode flange portion 41A has a welded surface 411A on an opposite side to the case 3. The welded surface 411A faces the outside in the Z-axis direction (opposite side to the case 3), and is a surface to which a member (conductive member such as a bus bar) for making the positive electrode terminal 4A conductive with an external terminal of another energy storage device, an external device, or the like is welded.

The positive electrode shaft portion 42A extends in the Z-axis direction and penetrates the case 3. That is, the positive electrode shaft portion 42A penetrates the case 3 (lid plate 32) in the Z-axis direction. Specifically, the positive electrode shaft portion 42A includes a positive electrode shaft portion main body 420A extending in the Z-axis direction and a positive electrode enlarged diameter portion 421A spreading from the positive electrode shaft portion main body 420A when viewed from the Z-axis direction.

The positive electrode shaft portion main body 420Ais a columnar portion extending in the Z-axis direction, and penetrates the case 3 (specifically, the lid plate 32). The positive electrode shaft portion main body 420 of the present embodiment has a columnar shape, and penetrates the insulating member 7A, the lid plate 32, the insulating member 7B, and the current collector 5.

The case 3 and the current collector 5 are sandwiched between the positive electrode enlarged diameter portion 421A and the positive electrode flange portion 41A in the Z-axis direction. The positive electrode enlarged diameter portion 42 1A of the present embodiment sandwiches the insulating member 7A, the lid plate 32, the insulating member 7B, and the current collector 5 with the positive electrode flange portion 41A. The positive electrode enlarged diameter portion 421A extends (expands in diameter) along the current collector 5 inside the case 3.

As shown in FIG. 1, FIG. 2, and FIG. 5 to FIG. 7, the negative electrode terminal 4B has a negative electrode flange portion (flange portion) 41B which spreads along the case 3 outside the case 3, and a negative electrode shaft portion (shaft portion) 42B which extends from the negative electrode flange portion 41B, penetrates the case 3, and is electrically connected to the electrode assembly 2. In the negative electrode terminal 4B, the negative electrode flange portion 41B and the negative electrode shaft portion 42B are separate bodies (separate members).

The negative electrode flange portion 41B spreads along the lid plate 32 of the case 3. To be more specific, the negative electrode flange portion 41B has a rectangular plate shape elongated in the X-axis direction. The negative electrode flange portion 41B has a through hole 412B through which the negative electrode shaft portion 42B is inserted. The through hole 412B penetrates the negative electrode flange portion 41B in the Z-axis direction (in other words, the thickness direction of the negative electrode flange portion 41B). The through hole 412B of the present embodiment has a circular shape and is disposed at the center portion of the negative electrode flange portion 41B.

The negative electrode flange portion 41B has a welded surface 411B on the opposite side to the case 3. Similarly to the welded surface 411A of the positive electrode terminal 4A, the welded surface 411B is directed outward in the Z-axis direction, and is a surface to which a conductive member such as a bus bar is welded.

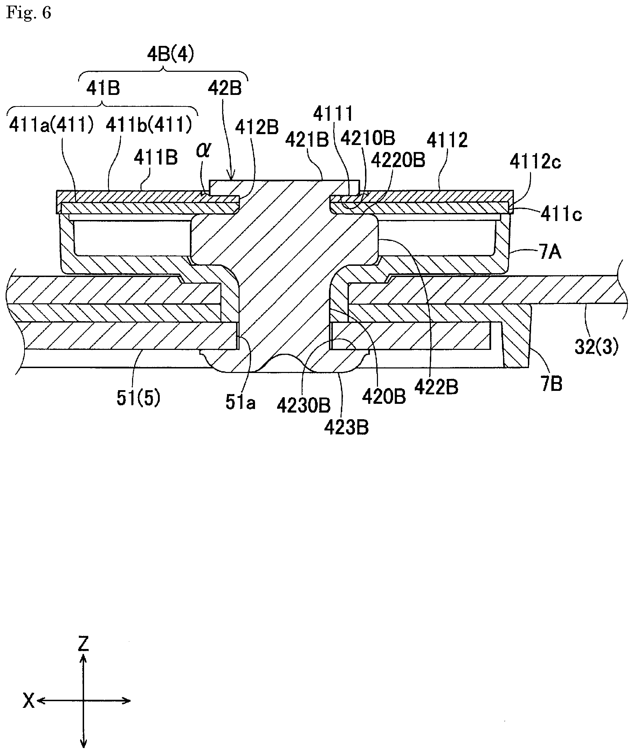

The negative electrode flange portion 41B has a plurality of (two in the example of the present embodiment) metal layers 411 layered in the Z-axis direction. The negative electrode flange portion 41B of the present embodiment is formed of a clad material. The metal layers 411 adjacent to each other in the plurality of metal layers 411 are made of different kinds of metals. One metal layer 411b of the plurality of metal layers 411 covers at least a peripheral end surface 411c of a metal layer 411a adjacent in the Z-axis direction (see FIG. 6).

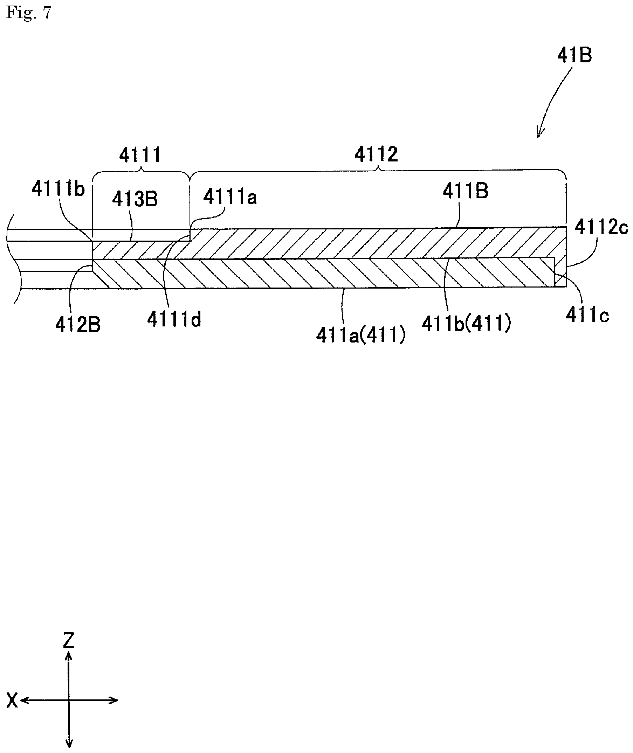

In the negative electrode flange portion 41B, the metal layer (first metal layer) 411a at one end (lower side in FIGS. 6 and 7) of the plurality of metal layers 411 in the Z-axis direction is made of the same type of metal as the negative electrode shaft portion 42B. In the negative electrode flange portion 41B, the metal layer (second metal layer) 411b at the other end in the Z-axis direction (upper side in FIGS. 6 and 7) of the plurality of metal layers 411 in the Z-axis direction is made of a different type of metal from that of the negative electrode shaft portion 42B. In the negative electrode flange portion 41B, the first metal layer 411a or the second metal layer 411b covers the peripheral end surface 411c of the remaining metal layer of the plurality of metal layers 411.

The negative electrode flange portion 41B of the present embodiment has two metal layers of the first metal layer 411a and the second metal layer 411b. In the negative electrode flange portion 41B, the second metal layer 411b covers the peripheral end surface 411c of the remaining metal layer (first metal layer) 411a. The electrical resistance of the metal constituting the second metal layer 411b is larger than the electrical resistance of the metal constituting the first metal layer 411a. In the negative electrode flange portion 41B of the present embodiment, for example, the first metal layer 411a is made of copper or a copper-based metal such as a copper alloy, and the second metal layer 411b is made of aluminum or an aluminum-based metal such as an aluminum alloy.

The first metal layer 411a is located on the case 3 side with respect to the second metal layer 411b in the negative electrode flange portion 41B. The first metal layer 411a spreads along the X-Y plane (plane including the X-axis direction and the Y-axis direction) direction, and the dimension (thickness) in the Z-axis direction at each position in the X-Y plane direction excluding the through hole 412B is constant. The first metal layer 411a of the present embodiment has a rectangular shape having a dimension in the X-axis direction of 20 mm and a dimension in the Y-axis direction of 8.3 mm, and has a thickness of 0.5 mm.

The second metal layer 411b is located on the opposite side to the case 3 with respect to the first metal layer 411a in the negative electrode flange portion 41B. The second metal layer 411b extends along the X-Y plane (plane including the X-axis direction and the Y-axis direction) direction and includes a thin portion 4111 surrounding the through hole 412B and a portion (thick portion) 4112 of the second metal layer 411b excluding the thin portion 4111.

The thin portion 4111 is thinner in the second metal layer 411b than the thick portion 4112. The dimension (thickness) of the thin portion 4111 in the Z-axis direction at each position in the X-Y plane direction is substantially constant. The width of the thin portion 4111 at each position in the circumferential direction (radial dimension of the through hole 412B) is constant. That is, when viewed from the Z-axis direction, an outer peripheral edge (boundary position with the thick portion 4112) 4111a (see FIG. 7) of the thin portion 4111 and an inner peripheral edge (boundary position with the through hole 412B) 4111b (see FIG. 7) are concentric circular shape. For example, the diameter of the outer peripheral edge 4111a of the present embodiment is 7.3 mm, and the diameter of the inner peripheral edge 4111b is 4 mm.

The thick portion 4112 is a portion surrounding the thin portion 4111 in the second metal layer 411b. The thick portion 4112 has a cover portion 4112c extending toward the first metal layer 411a and covering the peripheral end surface 411c of the first metal layer 411a at the peripheral edge portion. In the thick portion 4112, the dimension (thickness) in the Z-axis direction at each position in the X-Y plane direction is constant except for the cover portion 4112c. The thickness of the thick portion (excluding the peripheral edge portion) 4112 of the present embodiment is the same as the thickness of the first metal layer 411a. Therefore, the thin portion 4111 is thinner than the first metal layer 411a. In the thick portion 4112 of the present embodiment, the cover portion 4112c is provided in the entire circumferential region of the thick portion 4112.

In the second metal layer 411b, the thin portion 4111 is a portion having substantially the same dimension in the Z-axis direction at each position in the radial direction of the through hole 412B, and a portion having a larger dimension in the Z-axis direction than the thin portion 4111 is the thick portion 4112. In the second metal layer 411b of the present embodiment, a step 4111d is formed at the boundary between the thin portion 4111 and the thick portion 4112 (see FIG. 7). The welded surface 411B of the negative electrode flange portion 41B is constituted by the outer surface (surface facing the opposite side to the case 3) of the thick portion 4112 of the second metal layer 411b.

The negative electrode shaft portion 42B extends in the Z-axis direction and penetrates the case 3. That is, the negative electrode shaft portion 42B penetrates the case 3 (lid plate 32) in the Z-axis direction. Specifically, the negative electrode shaft portion 42B includes a negative electrode shaft portion main body 420B extending in the Z-axis direction, and a plurality of enlarged diameter portions (a first enlarged diameter portion 421B, a second enlarged diameter portion 422B, and a third enlarged diameter portion 423B) spreading from the negative electrode shaft portion main body 420B when viewed from the Z-axis direction. The negative electrode shaft portion main body 420B and the plurality of enlarged diameter portions 421B, 422B, and 423B are integrated. The negative electrode shaft portion 42B is made of, for example, copper or a copper-based metal such as a copper alloy.

The negative electrode shaft portion main body 420B is a columnar portion extending in the Z-axis direction, and penetrates the case 3 (specifically, the lid plate 32). The negative electrode shaft portion main body 420B of the present embodiment has a columnar shape, and penetrates the insulating member 7A, the lid plate 32, the insulating member 7B, and the current collector 5.

The first enlarged diameter portion 421B spreads (expands in diameter) along the second metal layer 411b of the negative electrode flange portion 41B on the outer side (opposite side to the case 3) of the negative electrode flange portion 41B in the Z-axis direction. Specifically, the first enlarged diameter portion 421B expands along the thin portion 4111 of the second metal layer 411b. The first enlarged diameter portion 421B has a surface including a first conduction surface (conduction surface) 4210B facing the case 3 side and in contact with (in conduction with) the thin portion 4111 (see FIG. 6). The first enlarged diameter portion 421B of the present embodiment spreads within the range of the thin portion 4111 from the end portion on the other side (upper side in FIG. 6) in the Z-axis direction of the negative electrode shaft portion main body 420B, and the contour viewed from the Z-axis direction is a circular shape concentric with the negative electrode shaft portion main body 420B. The first enlarged diameter portion 421B is smaller than the thin portion 4111 when viewed from the Z-axis direction. That is, when viewed from the Z-axis direction, there is a gap (portion recessed in a groove shape) between the contour of the first enlarged diameter portion 421B and the boundary position 4111a between the thin portion 4111 and the thick portion 4112 in the second metal layer 411b.

The second enlarged diameter portion 422B sandwiches a peripheral edge portion (through hole peripheral edge portion 413B: see FIG. 7) of the through hole 412B in the negative electrode flange portion 41B with the first enlarged diameter portion 421B in the Z-axis direction. The second enlarged diameter portion 422B spreads (expands in diameter) along the first metal layer 411a of the negative electrode flange portion 41B on the inner side (case 3 side) of the negative electrode flange portion 41B in the Z-axis direction. To be more specific, the second enlarged diameter portion 422B spreads along a peripheral edge portion (portion overlapping the thin portion 4111) of the through hole 412B in the first metal layer 411a. The second enlarged diameter portion 422B has a surface including a second conduction surface 4220B facing the opposite side to the case 3 and in contact with (in conduction with) the first metal layer 411a (see FIG. 6). The second enlarged diameter portion 422B of the present embodiment extends from an intermediate position in the Z-axis direction of the negative electrode shaft portion main body 420B, and a contour thereof viewed from the Z-axis direction is a circular shape concentric with the negative electrode shaft portion main body 420B.

In the negative electrode flange portion 41B of the present embodiment, the through hole peripheral edge portion 413B is constituted by the thin portion 4111 of the second metal layer 411b and a portion corresponding to the thin portion 4111 in the first metal layer 411a (portion overlapping the thin portion 4111).

The case 3 and the current collector 5 are sandwiched between the third enlarged diameter portion 423B and the second enlarged diameter portion 422B in the Z-axis direction. The third enlarged diameter portion 423B of the present embodiment sandwiches the insulating member 7A, the lid plate 32, the insulating member 7B, and the current collector 5 with the second enlarged diameter portion 422B. Specifically, the third enlarged diameter portion 423B spreads (expands in diameter) along the current collector 5 inside the case 3. The third enlarged diameter portion 423B has a surface including a third conduction surface 4230B facing the case 3 side in the Z-axis direction and in contact with (in conduction with) the current collector 5 (see FIG. 6). The third enlarged diameter portion 423B of the present embodiment extends from an end portion on one side (lower side in FIG. 6) in the Z-axis direction of the negative electrode shaft portion main body 420B, and the contour viewed from the Z-axis direction is a circular shape concentric with the negative electrode shaft portion main body 420B.

The first enlarged diameter portion 421B and the third enlarged diameter portion 423B described above are formed when the negative electrode flange portion 41B is attached to the negative electrode shaft portion 42B or when the negative electrode shaft portion 42B (or the negative electrode terminal 4B) is attached to the case 3. Specifically, it is as follows.

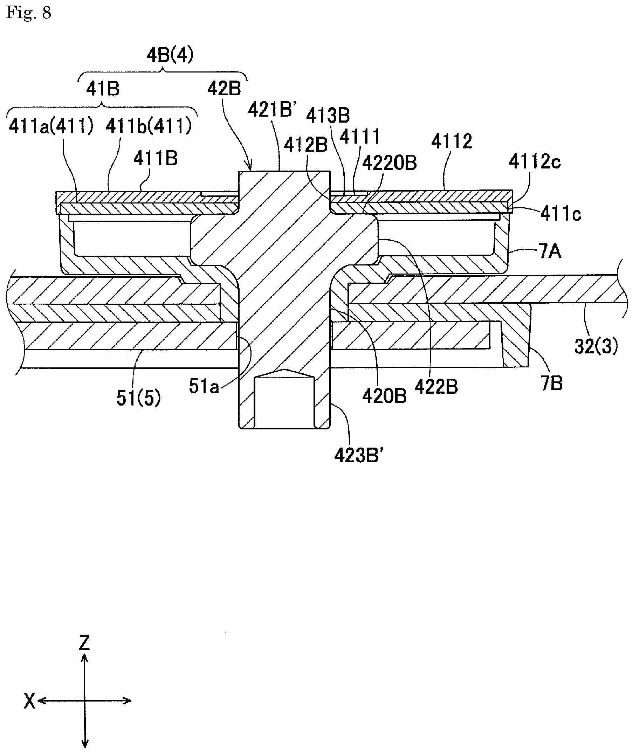

In the negative electrode shaft portion 42B, a portion corresponding to the first enlarged diameter portion 421B before the negative electrode flange portion 41B is attached (fixed) is a columnar portion (first enlarged diameter portion corresponding portion) 421B' into which the through hole 412B of the negative electrode flange portion 41B can be inserted as shown in FIGS. 2 and 8. The first enlarged diameter portion corresponding portion 421B' is inserted into the through hole 412B of the negative electrode flange portion 41B, and the through hole peripheral edge portion 413B of the negative electrode flange portion 41B is swaged in a state where the first enlarged diameter portion corresponding portion 421B' abuts on the second enlarged diameter portion (portion having a larger diameter than the through hole 412B) 422B (see FIG. 8). As a result, the first enlarged diameter portion corresponding portion 421B' spreads along the through hole peripheral edge portion 413B (thin portion 4111), and as a result, the first enlarged diameter portion 421B is formed, and the negative electrode flange portion 41B is connected (fixed) to the negative electrode shaft portion 42B.

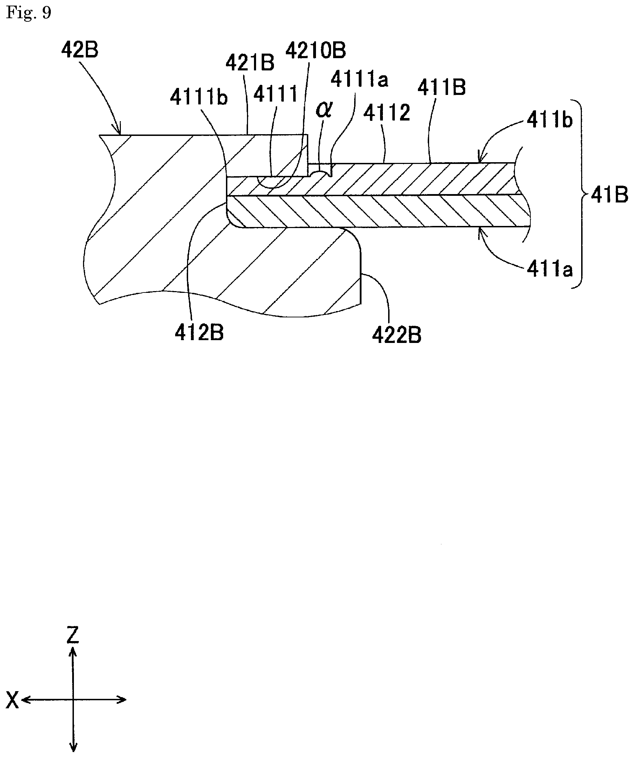

At this time, since the second metal layer 411b is made of an aluminum-based metal, it is soft, and when the first enlarged diameter portion corresponding portion 421B' is swaged, the peripheral edge portion of the through hole 412B in the second metal layer 411b is compressed and a part thereof tends to stretched in a direction away from the through hole 412B. However, since the negative electrode flange portion 41B is formed of a clad material and the second metal layer 411b and the first metal layer (first metal layer made of a hard copper-based metal) 411a are fixed to each other, the compressed portion (peripheral edge portion of the through hole 411B in the second metal layer 412b) cannot be stretched, and as a result, when the first enlarged diameter portion 421B is formed, the periphery thereof (second metal layer 421b around the first enlarged diameter portion 411B) bulges (see reference sign α in FIG. 9). Even if the bulge (convex part) α is formed around the first enlarged diameter portion 421B in this manner, the first enlarged diameter portion 421B is smaller than the thin portion 4111 in the X-Y plane direction, that is, a gap is formed between the peripheral edge of the first enlarged diameter portion 421B and the boundary position 4111a with the thick portion 4112 in the thin portion 4111, so that the formed bulge α is located in the gap (that is, the inside of the thin portion 4111). This prevents formation of the bulge α on the outer surface of the thick portion 4112 (welded surface 411B of the negative electrode flange portion 41B) due to swaging when the first enlarged diameter portion 421B is formed.

As shown in FIG. 2 and FIG. 8, in the negative electrode shaft portion 42B, a portion corresponding to the third enlarged diameter portion 423B before being attached (fixed) to the case 3 is a cylindrical portion (third enlarged diameter portion corresponding portion) 423B' which can be inserted into the respective through holes provided in the insulating member 7A, the case 3 (lid plate 32 in the example of the present embodiment), the insulating member 7B, and the current collector 5. The third enlarged diameter portion corresponding portion 423B' is swaged and enlarged in diameter in a state of being inserted through the respective through holes of the insulating member 7A, the case 3, the insulating member 7B, and the current collector 5 (in other words, a state of penetrating each of the members 7A, 3, 7B, and 5: see Fig. 8), whereby the third enlarged diameter portion 423B is formed.

The order in which the first enlarged diameter portion 421B and the third enlarged diameter portion 423B are formed is not limited. The first enlarged diameter portion 421B and the third enlarged diameter portion 423B may be formed in this order, or the third enlarged diameter portion 423B and the first enlarged diameter portion 421B may be formed in this order. The first enlarged diameter portion 421B and the third enlarged diameter portion 423B may be formed at the same timing.

Returning to FIG. 2, the current collector 5 is disposed in the case 3 and is directly or indirectly connected to the electrode assembly 2 in a conductive manner. The current collector 5 of the present embodiment is connected to the electrode assembly 2 via clip members 50 in a conductive manner. That is, the energy storage device 1 includes the clip members 50 which connect the electrode assembly 2 and the current collectors 5 to each other in a conductive manner.

The current collector 5 is formed of a member having conductivity. The current collectors 5 are disposed along the inner surface of the case 3. The current collector 5 of the present embodiment connects the external terminal 4 and the clip member 50 in a conductive manner. To be more specific, the current collector 5 includes a first connecting portion 51 which is connected to the external terminal 4 in a conductive manner, a second connecting portion 52 which is connected to the electrode assembly 2 in a conductive manner, and a bent portion 53 which connects the first connecting portion 51 and the second connecting portion 52 to each other. In the current collector 5, the bent portion 53 is disposed in the vicinity of the boundary between the lid plate 32 and the short wall portion 314 in the case 3, the first connecting portion 51 extends from the bent portion 53 along the lid plate 32, and the second connecting portion 52 extends from the bent portion 53 along the short wall portion 314. The first connecting portion 51 has a through hole 51a, and is electrically connected to the enlarged diameter portion (the positive electrode enlarged diameter portion 421A or the third enlarged diameter portion 423B) in a state where the shaft portion (the positive electrode shaft portion 42A or the negative electrode shaft portion 42B) of the external terminal 4 is inserted through the through hole 51a. The second connecting portion 52 of the present embodiment is joined to the clip member 50 by ultrasonic welding, for example.

The current collector 5 configured as described above is disposed on each of the positive electrode and the negative electrode of the energy storage device 1. In the energy storage device 1 of the present embodiment, the current collectors 5 are disposed along the uncovered layered portion 26 of the positive electrode and the uncovered layered portion 26 of the negative electrode of the electrode assembly 2 in the case 3. The current collector 5 of the positive electrode and the current collector 5 of the negative electrode are made of different materials. Specifically, the current collector 5 of the positive electrode is made of, for example, aluminum or an aluminum-based metal such as an aluminum alloy, and the current collector 5 of the negative electrode is made of, for example, copper or a copper-based metal such as a copper alloy.

The clip member 50 sandwiches the positive electrode 23 or the negative electrode 24 layered in the uncovered layered portion 26 of the electrode assembly 2 in a bundled manner. As a result, the clip member 50 reliably brings the positive electrodes 23 or the negative electrodes 24 layered in the uncovered layered portion 26 into conduction. The clip member 50 of the present embodiment is formed by bending a plate-shaped metal material so as to have a U-shaped cross section.

The insulating member 6 is disposed between the case 3 (to be more specific, the case main body 31) and the electrode assembly 2. The insulating member 6 is formed in a bag shape by bending a sheet-like member having an insulating property which is cut into a predetermined shape.

In the energy storage device 1 described above, in the negative electrode flange portion 41B, the second metal layer (one metal layer) 411b of the plurality of (two in the example of the present embodiment) metal layers 411 covers the peripheral end surface of the first metal layer 411a adjacent in the Z-axis direction. Therefore, the infiltration of moisture from the peripheral end surface of the negative electrode flange portion 41B into at least between the second metal layer 411b and the first metal layer 411a adjacent to the second metal layer 411b in the negative electrode flange portion 41B is suppressed.

In the energy storage device 1 of the present embodiment, the negative electrode flange portion 41B is formed of a clad material, and the metal layers (the first metal layer 411a and the second metal layer 411b) adjacent to each other in the plurality of metal layers 411 are made of different kinds of metals. The second metal layer 411b is a metal layer at one end in the Z-axis direction among the plurality of metal layers 411, and covers the peripheral end surface 411c of the remaining metal layer (first metal layer) 411a among the plurality of metal layers 411. In the negative electrode flange portion 41B formed of a clad material as described above, the metal layer (second metal layer) 411b at the one end covers the peripheral end surface 411c of the remaining metal layer (first metal layer) 411a, so that the infiltration of moisture into each metal diffusion layer from the peripheral end surface of the negative electrode flange portion 41B is effectively suppressed.

In the energy storage device 1, a portion of the negative electrode flange portion 41B on the opposite side to the case 3 (upper side in FIG. 6) is released as compared to a portion of the negative electrode flange portion 41B on the case 3 side because there is no arrangement of other members or the like and hence, moisture easily approaches the negative electrode flange portion 41B from the opposite side. Therefore, as in the energy storage device 1 of the present embodiment, the second metal layer 411b at the end of the negative electrode flange portion 41B on the opposite side to the case 3 covers the peripheral end surface 411c of the remaining metal layer (first metal layer) 411a from the opposite side to the case 3 toward the case 3, so that the infiltration of moisture from the released side (opposite side to the case 3) into between the metal layers 411a and 411b can be suppressed more effectively.

In the negative electrode flange portion 41B of the negative electrode terminal 4B of the present embodiment, the electrical resistance of the metal (aluminum-based metal in the example of the present embodiment) constituting the second metal layer 411b is larger than the electrical resistance of the metal (copper-based metal in the example of the present embodiment) constituting the first metal layer 411a. In a portion of the negative electrode flange portion 41B which is electrically connected to the negative electrode shaft portion 42B, specifically, a portion sandwiched between the first enlarged diameter portion 421B (first conduction surface 4210B) and the second enlarged diameter portion 422B (through hole peripheral edge portion 413B), the second metal layer 411b (thin portion 4111) is thinner than the first metal layer 411a (see FIG. 7). According to such a configuration, as compared with the case where the two metal layers 411a and 411b have the same thickness in the through hole peripheral edge portion 413B, the electric resistance (electric resistance value) between the second metal layer 411b and the first enlarged diameter portion 421B (first conduction surface 4210B) is suppressed, whereby the conduction between the negative electrode shaft portion 42B and the negative electrode flange portion 41B is improved.

In the energy storage device 1 of the present embodiment, in the second metal layer 411b, a portion (thin portion) 4111 which is electrically connected to the negative electrode shaft portion 42B (first conduction surface 4210B) is thinner than the thick portion 4112. The surface of the thick portion 4112 constitutes the welded surface 411B. That is, the thick portion 4112 has the welded surface 411B. As described above, in the second metal layer 411b, the portion (thin portion) 4111 electrically connected to the negative electrode shaft portion 42B (first conduction surface 4210B) is thinned, and the thick portion 4112 is thickened, whereby favorable conduction between the negative electrode shaft portion 42B and the negative electrode flange portion 41B is achieved, and the influence of heat due to the welding to the first metal layer 411a when another member is welded to the welded surface 411B of the second metal layer 411b is suppressed.

The energy storage device of the present invention is not limited to the above embodiment, and as a matter of course, various changes can be made without departing from the scope of the gist of the present invention. For example, the configuration of one embodiment can be added to the configuration of another embodiment, and a part of the configuration of one embodiment can be replaced with the configuration of another embodiment. In addition, a part of the configuration of one embodiment can be deleted.

In the energy storage device 1 of the above embodiment, the negative electrode flange portion 41B is formed of a clad material, but is not limited to this configuration. The negative electrode flange portion 41B may have a configuration in which a plurality of metal layers 411 are layered. That is, the metal layers 411 adjacent to each other may be bonded to each other by adhesion or the like.

In the energy storage device 1 of the above embodiment, the metal layer 411b at the end in the Z-axis direction among the plurality of layered metal layers 411 covers the peripheral end surface of the other metal layer 411a, but the present invention is not limited to this configuration. For example, in the negative electrode flange portion 41B in which three or more metal layers 411 are layered, the metal layer 411 at an intermediate position (other than the metal layer 411 at an end in the layering direction) in the layering direction (Z-axis direction) may cover at least the peripheral end surface of the metal layer 411 adjacent to the metal layer 411. According to such a configuration, the infiltration of moisture from the peripheral end surface of the negative electrode flange portion 41B into between at least one metal layer and the metal layer adjacent to the metal layer in the negative electrode flange portion 41B is suppressed.

In the energy storage device 1 of the above embodiment, only in the negative electrode terminal 4B, the flange portion (negative electrode flange portion 41B) and the shaft portion (negative electrode shaft portion 42B) are formed of different members, but the present invention is not limited to this configuration. Also in the positive electrode terminal 4A, the flange portion (positive electrode flange portion 41A) and the shaft portion (positive electrode shaft portion 42A) may be formed of different members.

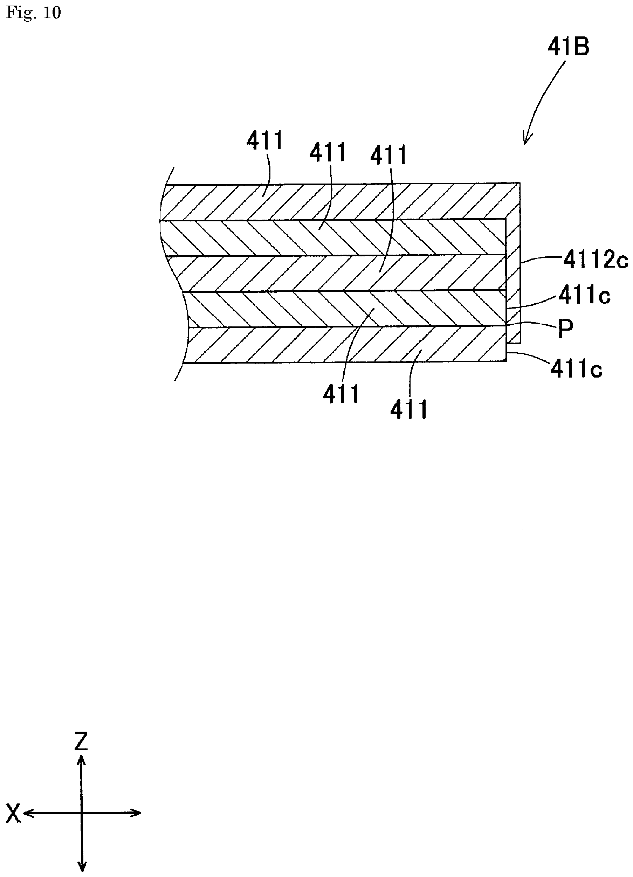

The negative electrode flange portion 41B has two metal layers 411 (specifically, the first metal layer 411a and the second metal layer 411b), but is not limited to this configuration. As shown in FIG. 10, the negative electrode flange portion 41B may have a configuration having three or more metal layers 411. In this case, the negative electrode flange portion 41B may have a plurality of metal layers 411 made of the same type of metal.

As shown in FIG. 9, the second metal layer 411b in the negative electrode flange portion 41B of the present embodiment has a configuration including the thin portion 4111 and the thick portion 4112, that is, a configuration in which a portion (thin portion 4111) electrically connected to the first enlarged diameter portion 421B (first conduction surface 4210B) of the negative electrode shaft portion 42B has a thickness different from that of the other portion (thick portion 4112), but is not limited to this configuration. The second metal layer 411b may be configured such that the thickness at each position is constant.

In the negative electrode flange portion 41B of the above embodiment, the metal layer (cover portion 4112c of the second metal layer 411b) at the other end in the Z-axis direction covers the entire peripheral end surface 411c (up to the lower end (one end in the Z-axis direction) in FIG. 7) of the remaining metal layer (first metal layer 411a), but the present invention is not limited to this configuration. As shown in FIG. 10, the cover portion 4112c may cover up to one side in the Z-axis direction from a boundary position P between the metal layers 411 adjacent to each other. For example, in the example shown in FIG. 10, the cover portion 4112c covers a position below the boundary position P between the peripheral end surface 411c of the lowermost metal layer 411 and the peripheral end surface 411c of the second metal layer 411 from the bottom and above the lower end of the peripheral end surface 411c of the lowermost metal layer 411.

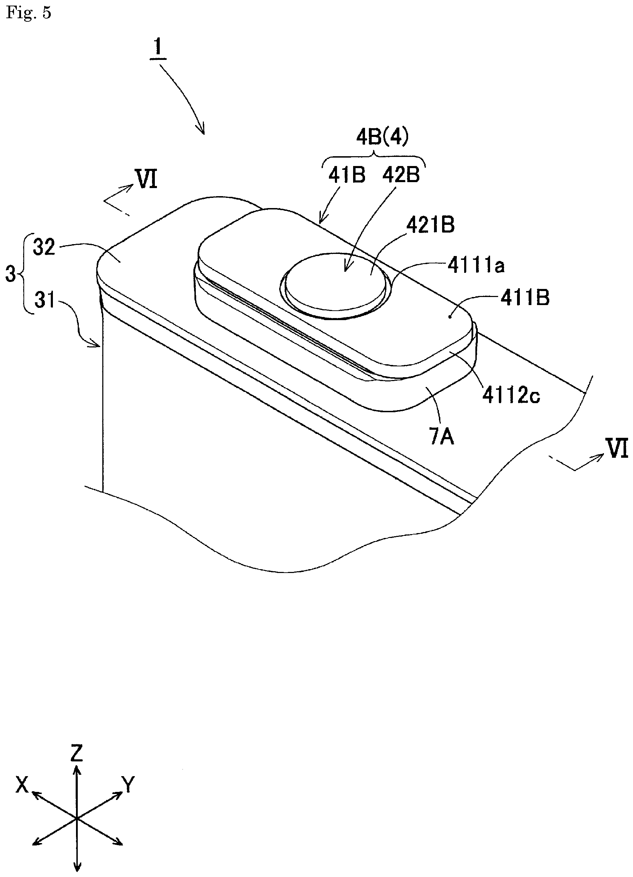

In the negative electrode flange portion 41B of the above embodiment, the peripheral edge portion (cover portion 4112c) of the second metal layer 411b covers the peripheral end surface 411c (boundary position P between metal layers 411 adjacent to each other) of the first metal layer 411a over the entire region in the circumferential direction (see FIGS. 5 and 7), but the present invention is not limited to this configuration. The cover portion 4112c may be configured to cover the boundary position P between the metal layers 411 adjacent to each other in a part in the circumferential direction (circumferential direction of the negative electrode flange portion 41B).

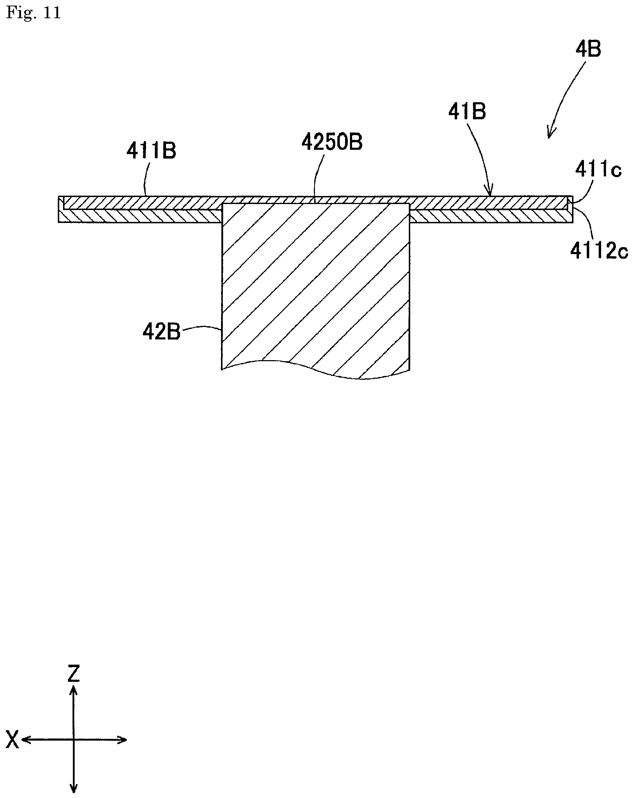

In the peripheral end portion of the negative electrode flange portion 41B, the metal layer 411b at the other end (opposite side to the case 3: upper side in FIG. 6) of the plurality of metal layers 411 in the Z-axis direction covers the peripheral end surface 411c of the metal layer 411a at one end (case 3 side: lower side in FIG. 6) of the plurality of metal layers 411 in the Z-axis direction, but the present invention is not limited to this configuration. As shown in FIG. 11, the metal layer 411 at one end (case 3 side: lower side in FIG. 11) of the plurality of metal layers in the Z-axis direction may cover the peripheral end surface 411c of the metal layer 411 at the other end (opposite side to case 3: upper side in FIG. 11) of the plurality of metal layers in the Z-axis direction. That is, the cover portion 4112c may be configured to extend in a direction away from the case 3 from the metal layer 411a at the end on the case 3 (lid plate 32) side in the Z-axis direction.

In the negative electrode terminal 4B of the above embodiment, the negative electrode shaft portion 42B penetrates the negative electrode flange portion 41B, but the present invention is not limited to this configuration. The negative electrode terminal 4B may have a configuration in which the negative electrode shaft portion 42B does not penetrate the negative electrode flange portion 41B (see FIG. 11).

In the negative electrode terminal 4B of the above embodiment, the negative electrode shaft portion 42B has the pair of enlarged diameter portions (the first enlarged diameter portion 421B and the second enlarged diameter portion 422B) at the connection position with the negative electrode flange portion 41B, and the through hole peripheral edge portion 413B of the negative electrode flange portion 41B is sandwiched between the pair of enlarged diameter portions 421B and 422B, but the present invention is not limited to this configuration. The negative electrode shaft portion 42B may not include an enlarged diameter portion at the connection position with the negative electrode flange portion 41B (see, for example, Fig. 11). As long as the negative electrode shaft portion 42B and the negative electrode flange portion 41B are electrically connected to each other (that is, the negative electrode shaft portion 42B includes the conduction surface 4250B which is electrically connected to the negative electrode flange portion 41B), the specific configuration of the connecting portion between the negative electrode shaft portion 42B and the negative electrode flange portion 41B is not limited.

Further, in the above embodiment, the case has been described where the energy storage device is used as a chargeable-dischargeable nonaqueous electrolyte secondary battery (for example, a lithium ion secondary battery), but the type and size (capacity) of the energy storage device are freely selectable. Further, in the above embodiment, the lithium ion secondary battery has been described as an example of the energy storage device, but the present invention is not limited thereto. For example, the present invention can be applied to various secondary batteries, primary batteries, and energy storage devices of capacitors such as electric double layer capacitors.

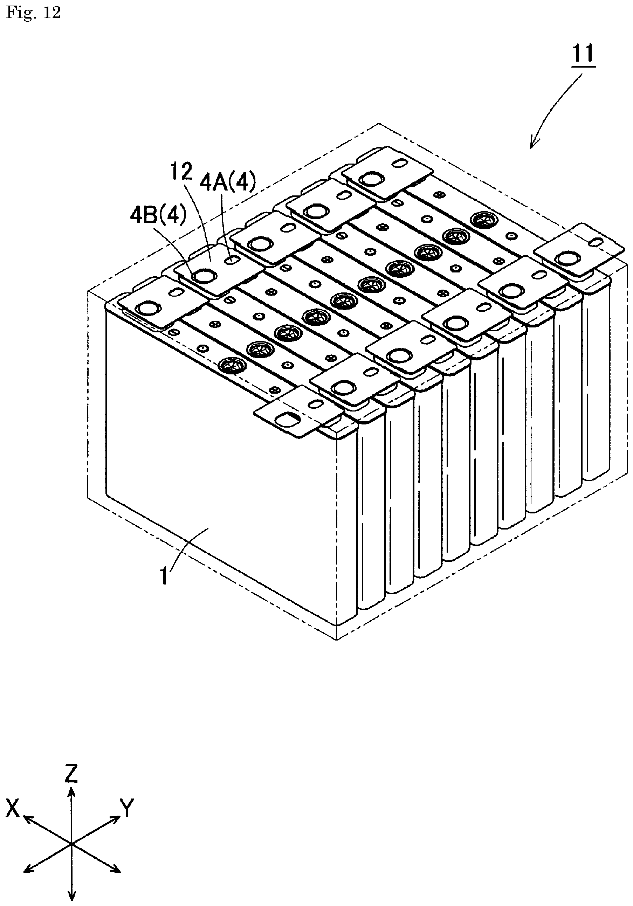

The energy storage device (for example, battery) 1 may be used in an energy storage apparatus (battery module when the energy storage device is a battery) 11 as shown in FIG. 12. The energy storage apparatus 11 includes at least two energy storage devices 1 and bus bar members 12 which each electrically connect two (different) energy storage devices 1 to each other. In this case, the technique of the present invention may be applied to at least one energy storage device 1.

### DESCRIPTION OF REFERENCE SIGNS

1: energy storage device
2: electrode assembly
21: winding core
22: layered product
23: positive electrode
231: metal foil
232: positive active material layer
24: negative electrode
241: metal foil
242: negative active material layer
25: separator
26: uncovered layered portion
3: case
31: case main body
311: closing portion
312: body portion
313: long wall portion
314: short wall portion
32: lid plate
34: opening peripheral edge portion
4: external terminal
4A: positive electrode terminal (external terminal)
41A: positive electrode flange portion
411A: welded surface
42A: positive electrode shaft portion
420A: positive electrode shaft portion main body
421A: positive electrode enlarged diameter portion
4B: negative electrode terminal (external terminal)
41B: negative electrode flange portion (flange portion)
411B: welded surface
412B: through hole
413B: through hole peripheral edge portion
411: metal layer
411a: first metal layer
411b: second metal layer
411c: peripheral end surface
4111: thin portion
4111a: outer peripheral edge of thin portion (boundary position between thin portion and thick portion)
4111b: inner peripheral edge of thin portion
4111d: step
4112: thick portion
4112c: cover portion
42B: negative electrode shaft portion (shaft portion)
420B: negative electrode shaft portion main body
421B: first enlarged diameter portion
421B': first enlarged diameter portion corresponding portion
4210B: first conduction surface
422B: second enlarged diameter portion
4220B: second conduction surface
423B: third enlarged diameter portion
423B': third enlarged diameter portion corresponding portion
4230B: third conduction surface
4250B: conduction surface
5: current collector
50: clip member
51: first connecting portion
51a: through hole
52: second connecting portion
53: bent portion
6: insulating member
7A, 7B: insulating member
11: energy storage apparatus
12: bus bar member
100: external terminal
101: shaft portion
102: flange portion
C: winding center axis
P: boundary position
α: bulge (convex part)

## Claims

1. An energy storage device comprising:
an electrode assembly;
a case that accommodates the electrode assembly; and
an external terminal made of metal and disposed in the case,
wherein the external terminal includes:
a flange portion spreading along the case outside the case; and
a shaft portion extending from the flange portion, penetrating the case, and electrically connected to the electrode assembly,
wherein the flange portion includes a plurality of metal layers layered in a penetrating direction of the shaft portion, and
wherein one metal layer of the plurality of metal layers covers at least a peripheral end surface of a metal layer adjacent to the one metal layer in the penetrating direction.

2. The energy storage device according to claim 1,
wherein the flange portion is formed of a clad material,
wherein metal layers adjacent to each other in the plurality of metal layers are made of different kinds of metals, and
wherein the one metal layer is a metal layer at one end in the penetrating direction among the plurality of metal layers, and covers a peripheral end surface of a remaining metal layer among the plurality of metal layers.

3. The energy storage device according to claim 1 or 2, wherein the one metal layer is a metal layer at an end opposite to the case in the penetrating direction among the plurality of metal layers, and covers a peripheral end surface of a remaining metal layer among the plurality of metal layers.

4. An energy storage device comprising:
an electrode assembly;
a case that accommodates the electrode assembly; and
an external terminal made of metal and disposed in the case,
wherein the external terminal includes:
a flange portion spreading along an outer surface of the case outside the case; and
a shaft portion extending from the flange portion, penetrating the case, and electrically connected to the electrode assembly,
wherein the flange portion includes a plurality of metal layers layered in a penetrating direction of the shaft portion,
wherein a second metal layer of the plurality of metal layers protrudes in the penetrating direction at least along a peripheral end surface of a first metal layer adjacent to the second metal layer in the penetrating direction, and
wherein the peripheral end surface is an end surface of the first metal layer in a direction orthogonal to the penetrating direction.

5. The energy storage device according to claim 4,
wherein the flange portion is formed of a clad material,
wherein metal layers adjacent to each other in the plurality of metal layers are made of different kinds of metals,
wherein the second metal layer is a metal layer disposed on an outermost side among the plurality of metal layers in the penetrating direction, and
wherein the second metal layer includes a cover portion protruding in the penetrating direction along the peripheral end surface of a remaining metal layer of the plurality of metal layers.

6. The energy storage device according to claim 4 or 5, wherein the second metal layer is a metal layer opposite to the case among the plurality of metal layers in the penetrating direction.

7. The energy storage device according to any one of claims 4 to 6,
wherein the second metal layer is a metal layer disposed on an outermost side among the plurality of metal layers in the penetrating direction, and
wherein the second metal layer includes a cover portion protruding from a boundary surface between the second metal layer and the first metal layer, the boundary surface spreading in a direction orthogonal to the penetrating direction, the cover portion protruding in the penetrating direction along an outer periphery of the first metal layer.

8. The energy storage device according to any one of claims 4 to 7, wherein the external terminal is a negative electrode.

9. The energy storage device according to any one of claims 4 to 8,
wherein the second metal layer includes aluminum or an aluminum-based metal, and
wherein the first metal layer includes copper or a copper-based metal layer.

10. The energy storage device according to any one of claims 4 to 9,
wherein the flange portion includes a through hole through which the shaft portion is inserted,
wherein the shaft portion includes:
an enlarged diameter portion formed between the flange portion and the outer surface of the case and spreading along the outer surface of the case; and
a swaged portion spreading along a surface of the flange portion opposite to the case and sandwiches a peripheral edge portion of the through hole in the flange portion between the swaged portion and the enlarged diameter portion, and
wherein a second metal layer which is a metal layer opposite to the case in the penetrating direction among the plurality of metal layers includes a concave part recessed in the penetrating direction or a through hole penetrating in the penetrating direction in a region that is larger than the swaged portion as viewed in the penetrating direction and includes the swaged portion as viewed in the penetrating direction.

11. The energy storage device according to any one of claims 4 to 10,
wherein the flange portion includes a convex part protruding in the penetrating direction in the concave part of the second metal layer, and
wherein the convex part is disposed between an outer peripheral edge of the concave part and an outer peripheral edge of the swaged portion in a direction orthogonal to the penetrating direction.
